Europäisches Patentamt

European Patent Office

Office européen des brevets

(19)

(11) **EP 0 674 300 B1**

(12) **FASCICULE DE BREVET EUROPEEN**

(45) Date de publication et mention
de la délivrance du brevet:
**05.07.2000 Bulletin 2000/27**

(51) Int Cl.⁷: **G08G 5/02**, G01C 21/00,
G05D 1/06

(21) Numéro de dépôt: **95400580.7**

(22) Date de dépôt: **16.03.1995**

(54) **Dispositif d'évitement de collisions pour aéronef notamment avec le sol par contrôle de pente d'approche**

Gerät zur Vermeidung von Flugzeugkollisionen, insbesondere mit dem Boden durch Anflugneigungskontrolle

Apparatus for aircraft collision avoidance, particularly with the ground, by approach slope control

(84) Etats contractants désignés:
**DE GB IT NL SE**

(30) Priorité: **22.03.1994 FR 9403343**

(43) Date de publication de la demande:
**27.09.1995 Bulletin 1995/39**

(73) Titulaire: **THOMSON-CSF SEXTANT**
**78141 Vélizy Villacoublay (FR)**

(72) Inventeurs:
• **Faivre, François**
**F-92402 Courbevoie Cedex (FR)**

• **Denoize, Xavier**
**F-92402 Courbevoie Cedex (FR)**

(74) Mandataire: **Benoit, Monique et al**
**Thomson-CSF Propriété Intellectuelle,**
**13, Avenue du Président Salvador Allende**
**94117 Arcueil Cédex (FR)**

(56) Documents cités:
**EP-A- 0 565 399**     **US-A- 3 752 967**
**US-A- 3 922 637**     **US-A- 4 164 340**

EP 0 674 300 B1

## Description

La présente invention concerne un dispositif d'évitement de collisions pour aéronef notamment avec le sol par contrôle de pente d'approche. Elle s'applique notamment à des avions de lignes en approche terminale sur un terrain. Plus généralement, elle s'applique à tous aéronefs amenés au cours de leur mission à se rapprocher trop près du sol, dans le cas de proximité de montagnes par exemple, ou à évoluer dans des secteurs de l'espace aérien dans lesquels ils représentent un danger ou sont eux-mêmes en danger, que l'aéronef soit en phase de décollage, de vol ou d'atterrissage.

Des dispositifs d'évitement de collision entre le sol et des aéronefs sont connus. Ces dispositifs se caractérisent principalement par l'utilisation de radioaltimètres, de calculateurs donnant la hauteur barométrique à partir de mesures de pression et de température, et de moyens de navigation tels qu'une centrale à inertie ou un système de gestion du vol. Le principe de ces dispositifs réside dans l'exploitation d'une hauteur altimétrique, prise par rapport au sol, et dans l'exploitation des variations de la hauteur radioaltimétrique ou barométrique. Cette dernière est notamment utilisée à cause de sa plus grande précision pour les hauteurs importantes par rapport à la variation de hauteur altimétrique. Ces distances par rapport au sol sont comparées à des valeurs de seuil qui dépendent elles-mêmes des valeurs de hauteurs et de la configuration de l'avion, suivant que son train, ses volets ou ses becs sont sortis par exemple. Lorsque les paramètres mesurés, hauteurs et variations de hauteurs en fonction du temps notamment, dépassent les valeurs de seuils, une alarme est émise à destination de l'équipage. Cependant, de tels dispositifs présentent l'inconvénient de donner des mesures trop tardives par rapport à l'évolution de l'avion donc de générer des alarmes souvent trop tardives empêchant les équipages de réagir à temps et susceptibles en conséquence de ne pas empêcher des collisions. Un autre inconvénient des dispositifs connus est qu'ils génèrent des alarmes injustifiées, encore appelées fausses alarmes. Celles-ci peuvent notamment intervenir quand les avions survolent un terrain avec un bonne hauteur de sécurité mais où les remontées de relief par exemple, pourtant sans danger, provoquent ces fausses alarmes. Celles-ci diminuent gravement la crédibilité de ces dispositifs anticollision.

Des améliorations ont été apportées à ces derniers, notamment en introduisant des bases de données qui permettent de moduler la valeur des seuils à prendre en compte en fonction de la position géographique des avions. Ces améliorations sont susceptibles de diminuer les fausses alarmes. Cependant, elles nécessitent des bases de données adaptées à chaque type de terrain. Dans la continuité de cette dernière solution, il est envisageable de disposer d'un modèle numérique de terrain qui permettrait de connaître en permanence en fonction de sa position, la nature du relief en amont d'un avion. Néanmoins, l'utilisation d'un tel modèle nécessite une base de données décrivant le relief de façon suffisamment précise, donc demandant des mémoires de grande taille. A cet inconvénient, s'ajoute la nécessité de procédures d'échanges et de mises à jour d'une telle base de données, ce qui complique son utilisation. Le grand nombre d'informations stockées implique par ailleurs des risques d'erreurs non négligeables.

Enfin, un dernier inconvénient réside dans le fait que pour limiter les risques de fausses alarmes, les dispositifs d'évitement précités sont généralement mis hors service en dessous d'une certaine altitude, lors de l'atterrissage notamment, cela est dû au fait que l'opération nécessite de se rapprocher du sol mais ne permet des variations importantes de la trajectoire, notamment vers le bas compte-tenu de la présence d'obstacles et du terrain.

Un brevet US 3 752 967 décrit un procédé permettant à un aéronef de rejoindre une trajectoire théorique.

Le but de l'invention est de pallier les inconvénients précités, notamment en s'affranchissant des aléas de variations de reliefs en déterminant la position de l'aéronef non plus par rapport au sol, mais par rapport à des altitudes de sécurité connues et en rendant le dispositif d'évitement opérationnel jusqu'à proximité du sol en jouant sur le contrôle de la pente de la trajectoire permettant à l'aéronef de rejoindre une piste d'atterrissage.

A cet effet, l'invention a pour objet un dispositif d'évitement de collisions pour un aéronef, à l'approche d'une piste, tel que défini par la revendication 1.

L'invention a pour principaux avantages qu'elle permet de prédire les risques d'écart de trajectoire et par conséquent ceux de collision et contribue donc à diminuer les temps de réaction des équipages vis à vis de ces risques, qu'elle diminue le nombre de fausses alarmes, qu'elle améliore la fiabilité des systèmes d'anticollision, qu'elle s'adapte à tous types de reliefs, de secteurs d'espaces aériens ou de contraintes de navigation et qu'elle ne nécessite pas de systèmes au sol d'aide à l'atterrissage.

D'autres caractéristiques et avantages de l'invention apparaîtront au cours de la description qui suit faite en regard des dessins annexés qui représentent :

- la figure 1, un exemple d'application d'un dispositif selon l'invention ;
- la figure 2, un synoptique d'un dispositif selon l'invention ;
- la figure 3, un aéronef dans sa phase d'atterrissage ;
- la figure 4, un exemple de réalisation d'un dispositif selon l'invention.

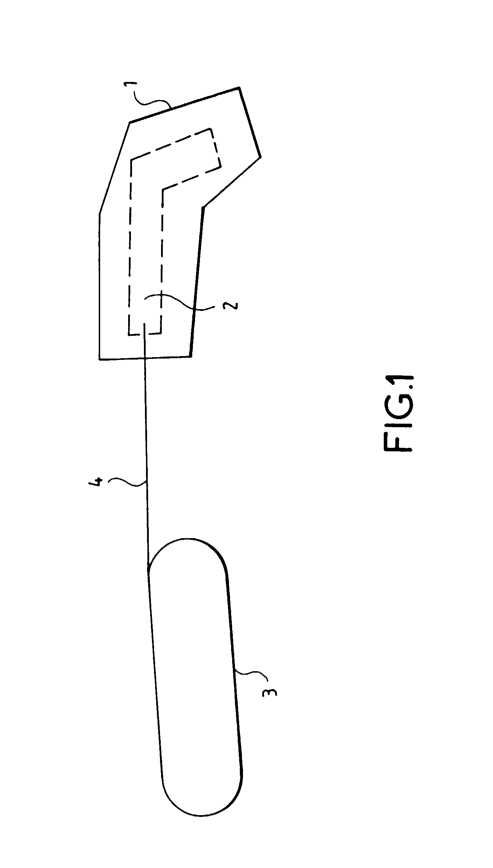

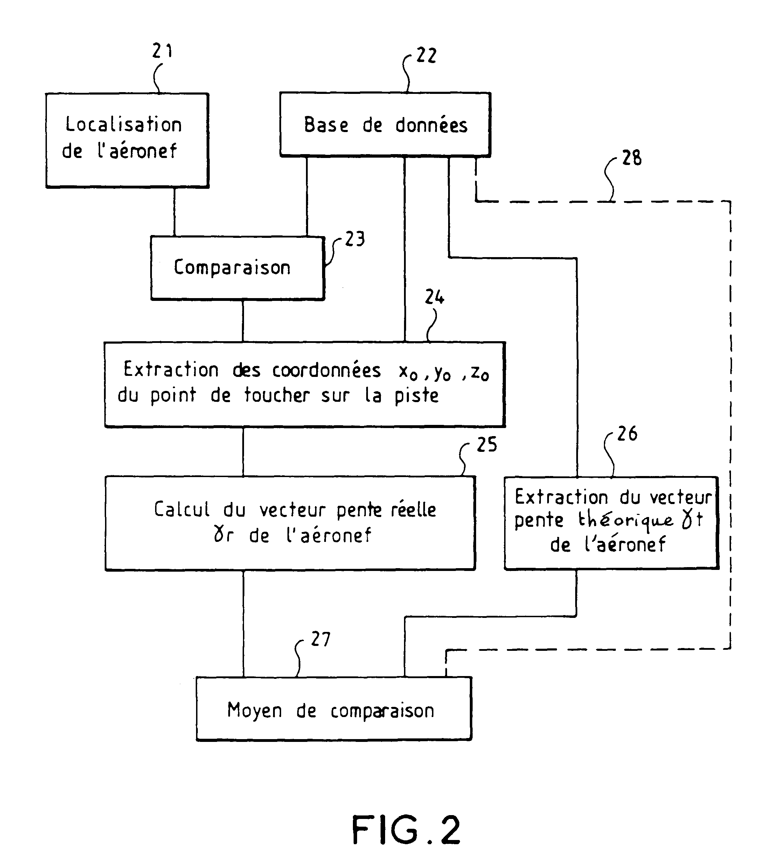

La figure 1 illustre un exemple d'application du dispositif selon l'invention, pour l'atterrissage sur un aéroport 1, la figure 2 présentant un synoptique d'un dispositif selon l'invention. Le dispositif selon l'invention comporte des moyens de localisation 21 de la position géographique de l'aéronef qu'il équipe, en fait les trois coordonnées d'espace de ce dernier. Il comprend aussi une base de données 22 contenant par exemple des informations relatives aux pistes des aéroports et les procédures associées, par exemple pour tous les aéroports du monde ou seulement ceux susceptibles de concerner l'aéronef. Plus précisément, la base de données 22 contient les informations relatives à l'altitude du seuil de la piste 2, le cap de la piste et la pente d'approche prévue par les procédures, et cela pour toutes les pistes de chaque aéroport enregistré.

A des instants réguliers par exemple, des premiers moyens de comparaison 23 comparent la position de l'aéronef avec les informations de la base de données 22, les moyens de comparaison 23 étant reliés à cette dernière et aux moyens de localisation 21. Quand le résultat de la comparaison indique la présence d'un aéroport 1 dans le voisinage, conformément à la route établie pour l'aéronef, cette route étant par exemple mémorisée dans les moyens de localisation 21 ou dans tout autre moyen de mémorisation, des moyens 24 d'extraction des coordonnées xo, yo, zo du point de toucher sur la piste fournissent ces coordonnées. Avant d'engager l'atterrissage, l'aéronef peut emprunter une voie aérienne d'attente 3, puis s'engager dans un couloir d'atterrissage 4 pour atterrir sur une piste 2.

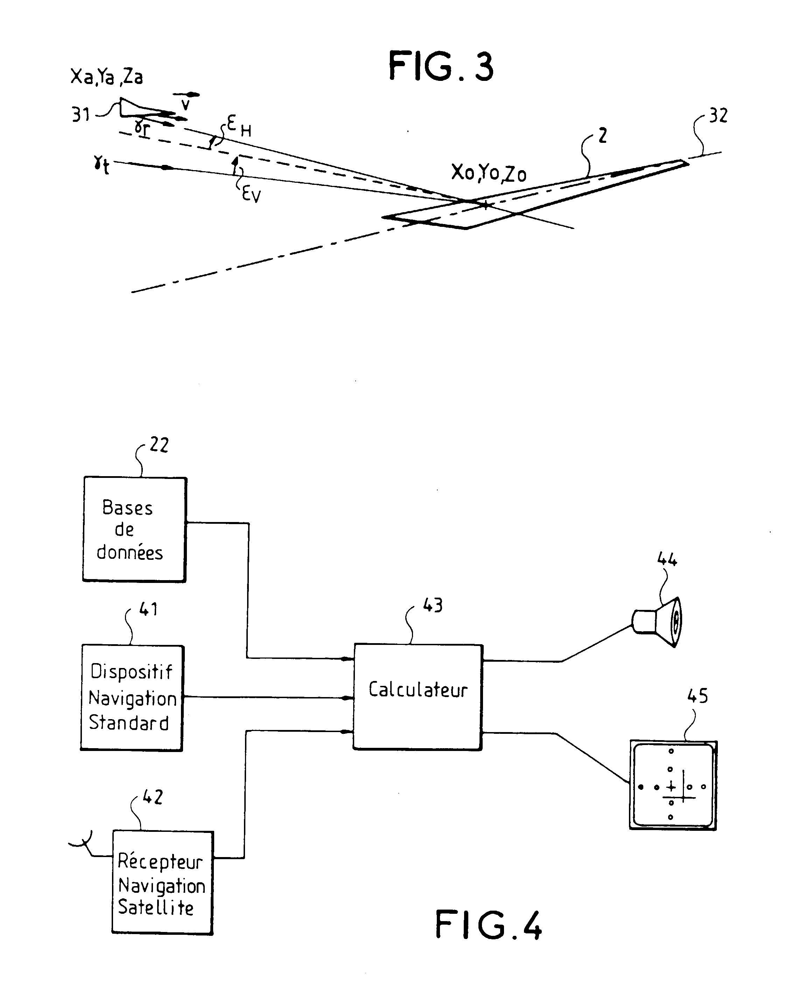

La figure 3 illustre un aéronef 31 dans sa phase d'atterrissage. Les moyens de localisation 21 permettent notamment d'obtenir les coordonnées d'espace xa, ya, za de l'aéronef 31 ayant un vecteur vitesse V. Les moyens d'extraction 24 permettent d'obtenir les coordonnées xo, yo, zo du point de toucher sur la piste 2, ces coordonnées sont par exemple mémorisées dans la base de données 22. Pour pouvoir extraire ces données, les moyens d'extraction 24 sont reliées à cette base de données 22. Des moyens 25 de calcul du vecteur pente réelle $\vec{\gamma}_r$ de l'aéronef 31 sont reliés aux moyens d'extraction 24. Les composantes du vecteur pente réelle $\vec{\gamma}_r$ sont notamment proportionnelles aux différences de coordonnées xa -xo, ya - yo, za - zo.

Des moyens 26 d'extraction du vecteur pente théorique $\vec{\gamma}_t$ de l'aéronef sont reliés à la base de données 22. Ces moyens 26 vont alors rechercher dans la base de données 22 le vecteur pente théorique $\vec{\gamma}_t$ que devrait avoir l'aéronef 31 en fonction des procédures d'atterrissage sur la piste considérée, enregistrées dans la base de données. Dans l'exemple de la figure 2, les moyens 26 d'extraction de la pente théorique permettent d'obtenir la pente théorique $\vec{\gamma}_t$ pour la piste 2 d'atterrissage de l'aéronef 31.

Des deuxièmes moyens de comparaison 27 sont reliés aux moyens 25 de calcul du vecteur pente réelle $\vec{\gamma}_r$ de l'aéronef et aux moyens 26 d'extraction du vecteur pente théorique $\vec{\gamma}_t$. Ces deuxièmes moyens 27 comparent ces deux vecteurs $\vec{\gamma}_r$ et $\vec{\gamma}_t$ en élaborant par exemple d'abord le calcul de l'écart horizontal $\varepsilon_H$ d'une

part et de l'écart vertical $\varepsilon_V$ d'autre part, puis en effectuant une comparaison de l'écart horizontal $\varepsilon_H$ avec un premier seuil d'une part et une comparaison de l'écart vertical avec un deuxième seuil d'autre part. Les moyens de comparaison 27 peuvent par exemple délivrer les écarts calculés $\varepsilon_H$, $\varepsilon_V$ à des moyens d'affichage à la disposition de l'équipage de l'aéronef. Quand l'écart horizontal $\varepsilon_H$ devient supérieur au premier seuil, une alarme est par exemple produite. Cette alarme est par exemple transmise à l'équipage de l'aéronef par des moyens visuels et/ou sonores. Un message visuel et/ou sonore peut dans ce cas être "alarme de type approche". Quand l'écart vertical $\varepsilon_V$ devient supérieur au deuxième seuil, une alarme est par exemple produite. Cette alarme est par exemple transmise à l'équipage par des moyens visuels ou sonores. Un message visuel ou sonore peut dans ce cas être "alarme de type terrain". Les premier et deuxième seuils précités auxquels sont comparés les écarts $\varepsilon_H$, $\varepsilon_V$ sont soit des valeurs théoriques connues a priori, soit des valeurs contenues dans la base de données 22. Dans ce dernier cas, une liaison 28 est nécessaire entre la base de données 22 et les deuxièmes moyens de comparaison 27.

Afin de limiter les risques de fausses alarmes, le dispositif selon l'invention n'est par exemple activé qu'en dessous d'une certaine hauteur. Au-dessus de cette hauteur, tous types de systèmes d'anticollision avec le sol peuvent être utilisés.

En plus des moyens représentés à la figure 2, le dispositif comporte par exemple des moyens lui permettant de comparer son cap avec les caps 32 des pistes de l'aéroport. Si aucune piste située au voisinage de l'aéronef ne possède un cap égal au cap de l'avion, une alarme peut être par exemple produite, un message visuel et/ou sonore peut dans ce cas être en alignement.

Ces moyens permettent par ailleurs d'évaluer la piste sur laquelle l'aéronef est en approche. Cela permet donc par la suite aux moyens d'extraction du dispositif selon l'invention de prendre en compte les paramètres et procédures liés à la piste d'atterrissage reconnue.

La figure 4 présente un mode de réalisation possible d'un dispositif selon l'invention. Les moyens de localisation 21 sont par exemple constitués d'un dispositif de navigation standard 41 et d'un récepteur de navigation satellite 42, ce dernier servant notamment à améliorer la précision de la localisation.

Les premiers moyens de comparaison 23, les moyens 24 d'extraction des coordonnées du point de toucher sur la piste, les moyens 25 de calcul du vecteur pente réelle de l'aéronef, les moyens 26 d'extraction du vecteur pente théorique, les deuxièmes moyens de comparaison 27 et les moyens de comparaison des caps de l'aéronef et des pistes sont par exemple constitués par un calculateur 43 relié à la base de données 22, au dispositif de navigation standard 41 et au récepteur de navigation satellite 42. Le calculateur 43 est par exemple relié à des moyens sonores 44 à qui il transmet des messages d'alarme par exemple. Le calculateur 43 est aussi par exemple relié à des moyens de visualisation 45 reproduisant à partir des données fournies par le calculateur des informations d'écartométrie et du guidage ainsi que des messages d'alarme par exemple.

Le dispositif selon l'invention permet d'assurer la fonction d'anticollision avec le sol aux faibles altitudes avec efficacité et sans un taux de fausses alarmes significatif. Cette fonction peut être assurée sur l'ensemble des aéroports avec un besoin d'installation au sol très limité. En effet, il peut être envisagé de faire fonctionner le dispositif sans station au sol pour chaque piste ou pour chaque aéroport. Les performances peuvent cependant être améliorées grâce à une station au sol régionale ou locale.

L'exemple d'application précédemment décrit du dispositif selon l'invention concerne un atterrissage. Cependant, le dispositif selon l'invention peut aussi être appliqué dans le cas d'un décollage, notamment pour s'assurer que sa pente de décollage est bien conforme aux procédures prévues. Plus généralement le dispositif selon l'invention peut s'appliquer à toutes phases de vol comprenant des trajectoires à pentes.

## Revendications

1.    Dispositif d'évitement de collisions pour un aéronef (31), à l'approche d'une piste (2), comprenant au moins :

- des moyens (21) de localisation de l'aéronef ;
- une base de données (22) contenant des informations relatives à la piste et aux procédures associées ;
- des premiers moyens de comparaison (23) reliés aux moyens (21) de localisation et à la base de données (22), comparant la position de l'aéronef avec des informations contenues dans la base de données (22);
- des moyens d'extraction (24) des coordonnées (xo, yo, zo) du point de toucher sur la piste (2) reliés aux premiers moyens de comparaison (23) ;
- des moyens (25) de calcul du vecteur pente réelle ($\gamma_r$) de l'aéronef (31) reliés aux moyens d'extraction (24) ;
- des moyens (26) d'extraction du vecteur pente théorique ($\gamma_t$) de l'aéronef (31) reliés à la base de données (22) ;
- des deuxièmes moyens de comparaison (27) reliés aux moyens de calcul (25) du vecteur pente réelle, aux moyens d'extraction (26) du vecteur pente thérorique et à la base de données (22),

caractérisé en ce que les composantes du vecteur pente réelle ($\gamma_r$) étant proportionnelles aux différences de coordonnées (xa-xo,ya-yo, za-zo) entre la position d'espace de l'aéronef (31) et du point de toucher sur la piste, les deuxièmes moyens de comparaison, comparent le vecteur pente réelle ($\gamma_r$) et le vecteur pente théorique ($\gamma_t$), les deuxièmes moyens de comparaison (27) élaborant le calcul de l'écart vertical ($\varepsilon_V$) entre les deux vecteurs pente ($\gamma_r$, $\gamma_t$) puis comparent cet écart avec un deuxième seuil contenu dans la base de données (22).

2.    Dispositif selon la revendication 1, caractérisé en ce que les deuxièmes moyens de comparaison (27) élaborent le calcul de l'écart horizontal ($\varepsilon_H$) entre les deux vecteurs pente ($\gamma_r$, $\gamma_t$) puis comparent cet écart avec un deuxième seuil contenu dans la base de données (22).

3.    Dispositif selon l'une quelconque des revendications précédentes, caractérisé en ce qu'une alarme est produite quand l'écart ($\varepsilon_H$, $\varepsilon_V$) devient supérieur au seuil contenu dans la base de données (22).

4.    Dispositif selon l'une quelconque des revendications précédentes, caractérisé en ce qu'il n'est pas activé au dessus d'une certaine hauteur.

5.    Dispositif selon l'une quelconque des revendications précédentes, caractérisé en ce qu'il comporte des moyens lui permettant de comparer son cap avec le cap (32) de la piste (2).

6.    Dispositif selon l'une quelconque des revendications précédentes, caractérisé en ce que les moyens de localisation (21) sont constitués d'un dispositif de navigation standard (41) et d'un récepteur de navigation satellite (42).

7.    Dispositif selon l'une quelconque des revendications précédentes, caractérisé en ce que les premiers moyens de comparaison (23), les moyens d'extraction (24) des coordonnées du point de toucher sur la piste, les moyens (25) de calcul du vecteur pente réelle de l'aéronef, les moyens d'extraction (26) du vecteur pente théorique et les deuxième moyens de comparaison (27) sont constituées par un calculateur (43).

8.    Dispositif selon l'une quelconque des revendications précédentes, caractérisé en ce que la piste (2) est une piste d'atterrissage.

## Patentansprüche

1.    Vorrichtung zur Vermeidung von Kollisionen für ein Flugzeug (31) bei Annäherung an eine Piste (2), die wenigstens umfaßt:

- Mittel (21) zur Lokalisierung des Flugzeugs;
- eine Datenbank (22), die Informationen enthält, die auf die Piste und auf zugeordnete Prozeduren bezogen sind;
- erste Vergleichsmittel (23), die mit den Lokalisierungsmitteln (21) und mit der Datenbank (22) verbunden sind und die Position des Flugzeugs mit den in der Datenbank (22) enthaltenen Informationen vergleichen;
- Mittel (24) zum Extrahieren von Koordinaten (xo, yo, zo) des Aufsetzpunkts auf der Piste (2), die mit den ersten Vergleichsmitteln (23) verbunden sind;
- Mittel (25) zum Berechnen des wirklichen Neigungsvektors ($\gamma_r$) des Flugzeugs (3), die mit den Extraktionsmitteln (24) verbunden sind;
- Mittel (26) zum Extrahieren des theoretischen Neigungsvektors ($\gamma_t$) des Flugzeugs (31), die mit der Datenbank (22) verbunden sind;
- zweite Vergleichsmittel (27), die mit den Mitteln (25) zum Berechnen des wirklichen Neigungsvektors, mit den Mitteln (26) zum Extrahieren des theoretischen Neigungsvektors und mit der Datenbank (22) verbunden sind,

dadurch gekennzeichnet, daß die zweiten Vergleichsmittel, da die Komponenten des wirklichen Neigungsvektors ($\gamma_r$) zu den Koordinatendifferenzen (xa-xo, ya-yo, za-zo) zwischen der Position des Flugzeugs (31) im Raum und dem Aufsetzpunkt auf der Piste proportional sind, den wirklichen Neigungsvektor ($\gamma_r$) mit dem theoretischen Neigungsvektor ($\gamma_t$) vergleichen, wobei die zweiten Vergleichsmittel (27) die Berechnung des vertikalen Abstands ($\varepsilon_V$) zwischen den beiden Neigungsvektoren ($\gamma_r$, $\gamma_t$) ausführen und dann diesen Abstand mit einem in der Datenbank (22) enthaltenen zweiten Schwellenwert vergleichen.

2. Vorrichtung nach Anspruch 1, dadurch gekennzeichnet, daß die zweiten Vergleichsmittel (27) die Berechnung des horizontalen Abstands ($\varepsilon_H$) zwischen den beiden Neigungsvektoren ($\gamma_r$, $\gamma_t$) ausführen und dann diesen Abstand mit einem in der Datenbank (22) enthaltenen ersten Schwellenwert vergleichen.

3. Vorrichtung nach einem der vorangehenden Ansprüche, dadurch gekennzeichnet, daß ein Alarm erzeugt wird, wenn der Abstand ($\varepsilon_H$, $\varepsilon_V$) größer als der in der Datenbank (22) enthaltene Schwellenwert wird.

4. Vorrichtung nach einem der vorangehenden Ansprüche, dadurch gekennzeichnet, daß sie oberhalb einer bestimmten Höhe nicht aktiviert wird.

5. Vorrichtung nach einem der vorangehenden Ansprüche, dadurch gekennzeichnet, daß sie Mittel enthält, die ihr ermöglichen, ihren Kurs mit dem Kurs (32) der Piste (2) zu vergleichen.

6. Vorrichtung nach einem der vorangehenden Ansprüche, dadurch gekennzeichnet, daß die Lokalisierungsmittel (21) aus einer Standard-Navigationsvorrichtung (41) und aus einem Satellitennavigation-Empfänger (42) gebildet sind.

7. Vorrichtung nach einem der vorangehenden Ansprüche, dadurch gekennzeichnet, daß die ersten Vergleichsmittel (23), die Mittel (24) zum Extrahieren der Koordinaten des Aufsetzpunkts auf der Piste, die Mittel (25) zum Berechnen des wirklichen Neigungsvektors des Flugzeugs, die Mittel (26) zum Extrahieren des theoretischen Neigungsvektors und die zweiten Vergleichsmittel (27) durch einen Rechner (43) gebildet sind.

8. Vorrichtung nach einem der vorangehenden Ansprüche, dadurch gekennzeichnet, daß die Piste eine Landebahn ist.

**Claims**

1. Collision avoidance device for an aircraft (31), on the approach to a strip (2), comprising at least:

   - means (21) of location of the aircraft;
   - a database (22) containing information relating to the strip and to the associated procedures;
   - first comparison means (23) linked to the location means (21) and to the database (22), comparing the position of the aircraft with information contained in the database (22);
   - means (24) for extracting the coordinates (xo, yo, zo) of the point of touchdown on the strip (2), which are linked to the first comparison means (23) ;
   - means (25) for calculating the real slope vector ($\gamma_r$) of the aircraft (31), which are linked to the extraction means (24);
   - means (26) for extracting the theoretical slope vector ($\gamma_t$) of the aircraft (31), which are linked to the database (22);
   - second comparison means (27) linked to the means (25) for calculating the real slope vector, to the means (26) for extracting the theoretical slope vector and to the database (22),

   characterized in that the components of the real slope vector ($\gamma_r$) being proportional to the differences in coordinates (xa-xo, ya-yo, za-zo) between the position in space of the aircraft (31) and the point of touchdown on the strip, the second comparison means compare the real slope vector ($\gamma_r$) and the

theoretical slope vector ($\gamma_t$), the second comparison means (27) carry out the calculation of the vertical deviation ($\varepsilon_v$) between the two slope vectors ($\gamma_r$, $\gamma_t$) and then compare this deviation with a second threshold contained in the database (22).

2. Device according to Claim 1, characterized in that the second comparison means (27) carry out the calculation of the horizontal deviation (EH) between the two slope vectors ($\gamma_r$, $\gamma_t$) then compare this deviation with a second threshold contained in the database (22).

3. Device according to any one of the preceding claims, characterized in that an alarm is produced when the deviation ($\varepsilon_H$, $\varepsilon_B$) becomes greater than the threshold contained in the database (22).

4. Device according to any one of the preceding claims, characterized in that it is not activated above a certain height.

5. Device according to any one of the preceding claims, characterized in that it comprises means enabling it to compare its heading with the heading (32) of the strip (2).

6. Device according to any one of the preceding claims, characterized in that the means of location (21) consist of a standard navigation device (41) and of a satellite navigation receiver (42).

7. Device according to any one of the preceding claims, characterized in that the first comparison means (23), the means (24) for extracting the coordinates of the touchdown point on the strip, the means (25) for calculating the real slope vector of the aircraft, the means (26) for extracting the theoretical slope vector and the second comparison means (27) consist of a computer (43).

8. Device according to any one of the preceding claims, characterized in that the strip (2) is a landing strip.

FIG.1

```
                                          21                                  22
                                   ┌──────────────────┐         ┌──────────────────────────┐
                                   │   Localisation   │         │    Base  de  données     │                        28
                                   │   de  l'aéronef  │         └──────────────────────────┘
                                   └──────────────────┘
                                                                                  23
                                              ┌─────────────────────┐
                                              │     Comparaison     │
                                              └─────────────────────┘
                                                                       24
                                   ┌──────────────────────────────────────────────┐
                                   │  Extraction  des  coordonnées  $x_0, y_0, z_0$ │
                                   │  du  point  de  toucher  sur  la  piste        │
                                   └──────────────────────────────────────────────┘
                                                                       25
                                   ┌──────────────────────────────────┐      26
                                   │  Calcul  du  vecteur  pente réelle │   ┌────────────────────────────┐
                                   │      $\gamma r$  de  l'aéronef      │   │ Extraction  du  vecteur    │
                                   └──────────────────────────────────┘   │ pente  théorique  $\gamma t$ │
                                                                           │      de  l'aéronef          │
                                                                           └────────────────────────────┘
                                                        27
                                   ┌──────────────────────────────────┐
                                   │     Moyen  de  comparaison        │
                                   └──────────────────────────────────┘
```

# FIG.2

# FIG. 3

# FIG.4